(19) Europäisches Patentamt
European Patent Office
Office européen des brevets

(11) **EP 2 495 419 B1**

(12) **EUROPEAN PATENT SPECIFICATION**

(45) Date of publication and mention
of the grant of the patent:
**24.12.2014 Bulletin 2014/52**

(51) Int Cl.:
*F02D 23/00* (2006.01)  *F02D 17/02* (2006.01)

(21) Application number: **09850845.0**

(22) Date of filing: **30.10.2009**

(86) International application number:
**PCT/JP2009/068664**

(87) International publication number:
**WO 2011/052066 (05.05.2011 Gazette 2011/18)**

(54) **CONTROL SYSTEM FOR INTERNAL COMBUSTION ENGINE**

STEUERUNGSSYSTEM FÜR EINEN VERBRENNUNGSMOTOR

SYSTÈME DE COMMANDE POUR MOTEUR À COMBUSTION INTERNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**05.09.2012 Bulletin 2012/36**

(73) Proprietor: **TOYOTA JIDOSHA KABUSHIKI
KAISHA
Toyota-shi, Aichi-ken, 471-8571 (JP)**

(72) Inventors:
• **OGISO, Makoto
Toyota-shi
Aichi-ken 471-8571 (JP)**
• **AOYAMA, Taro
Toyota-shi,
Aichi-ken 471-8571 (JP)**

(74) Representative: **TBK
Bavariaring 4-6
80336 München (DE)**

(56) References cited:
**JP-A- 2004 245 123    JP-A- 2008 002 347
JP-A- 2008 038 661    JP-A- 2009 013 872
US-A1- 2006 236 693    US-A1- 2007 246 028**

## Description

### Technical Field

The present invention relates to a control apparatus for an internal combustion engine, and more particularly to a control apparatus for an internal combustion engine that includes a high-pressure EGR mechanism and a low-pressure EGR mechanism.

### Background Art

As the conventional technology related to the present invention, a control apparatus for an internal combustion engine that includes a high-pressure EGR mechanism and a low-pressure EGR mechanism is known, as disclosed, for example, in Patent Literature 1 (Japanese Patent Laid-Open No. 2009-185791). According to this conventional technology, the recirculation state of exhaust gas is suitably controlled by appropriately using the high-pressure EGR mechanism or the low-pressure EGR mechanism in accordance with the operational state of an internal combustion engine. According to the conventional technology of this kind, a configuration is adopted in which the flow rate of exhaust gas that is recirculated to an intake air system by the low-pressure EGR mechanism is controlled based on the output of a differential pressure sensor. In this case, the differential pressure sensor detects a pressure difference (differential pressure) between an upstream section and a downstream section of the low-pressure EGR passage, and outputs the detection result to a control apparatus. As a result, the control apparatus can convert the output signal of the differential pressure sensor into a flow rate, and detect the recirculation amount of the exhaust gas.

However, an error is liable to arise in the output signal of the differential pressure sensor due to changes in the temperature environment and the like. Therefore, according to the conventional technology as disclosed, for example, in Patent Literature 2 (Japanese Patent Laid-Open No. 2008-38661), a configuration is adopted that learns an output error of a differential pressure sensor. According to this conventional technology, a differential pressure sensor is used to detect a differential pressure between an upstream side and a downstream side of a particulate filter, and ascertain the amount of particulate matter (PM) collected in the filter. Further, with respect to the learning control, a configuration is adopted that compares a differential pressure detected by the differential pressure sensor in a state in which PM inside the filter has been oxidized and removed and a previously determined reference differential pressure, to thereby learn a sensor error.

Citation List

Patent Literature

Patent Literature 1
Japanese Patent Laid-Open No. 2009-185791
Patent Literature 2
Japanese Patent Laid-Open No. 2008-38661

### Summary of Invention

### Technical Problem

According to the conventional technology described in the aforementioned Patent Literature 2, a configuration is adopted in which a fixed reference state is created by oxidizing and removing PM, and thereafter learning control is performed with respect to the differential pressure sensor. According to the conventional technology disclosed in Patent Literature 1 also, it is preferable to perform learning control with respect to the differential pressure sensor in order to accurately control the recirculation amount of exhaust gas. However, in the conventional technology, when it is attempted to create a fixed reference state, it is necessary to, for example, install an electromagnetic valve or the like on an upstream end and a downstream end, respectively, of a low-pressure EGR passage and block off the low-pressure EGR passage. For this reason, according to the conventional technology disclosed in Patent Literature 1, when it is attempted to execute learning control with respect to the differential pressure sensor, there is the problem that the system configuration becomes complicated and costs increase.

The present invention has been made to solve the above described problem, and an object of the present invention is to provide a control apparatus for an internal combustion engine that can easily establish a learning condition for learning the output characteristics of a differential pressure sensor by performing control utilizing a pre-existing configuration.

**Means for Solving the Problem**

A first aspect of the present invention is a control apparatus for an internal combustion engine, comprising:

a turbocharger that has a turbine that is provided in an exhaust passage of an internal combustion engine and a compressor that is provided in an intake passage, and that supercharges intake air utilizing an exhaust pressure;

a high-pressure EGR passage that causes an exhaust gas that is diverted from the exhaust passage on an upstream side of the turbine to recirculate to the intake passage, in which a flow rate of the exhaust gas is adjusted by a high-pressure EGR valve;

a low-pressure EGR passage that causes an exhaust gas that is diverted from the exhaust passage on a downstream side of the turbine to recirculate to the intake passage on an upstream side of the compressor, in which a flow rate of the exhaust gas is adjusted by a low-pressure EGR valve;

a high-pressure throttle valve that opens and closes the intake passage on a downstream side of the compressor;

a low-pressure throttle valve that is comprised by either one of an intake throttle valve that opens and closes the intake passage on an upstream side of the low-pressure EGR passage and an exhaust throttle valve that opens and closes the exhaust passage on a downstream side of the low-pressure EGR passage;

a differential pressure sensor that detects a pressure difference between an upstream section and a downstream section of the low-pressure EGR passage in order to control a recirculation amount of an exhaust gas based on the pressure difference;

learning condition setting means that makes the pressure difference between the upstream section and the downstream section of the low-pressure EGR passage zero using at least one of the high-pressure EGR valve, the low-pressure EGR valve, the high-pressure throttle valve, and the low-pressure throttle valve, in order to learn an output characteristic of the differential pressure sensor; and

learning control means that learns an output characteristic based on an output of the differential pressure sensor in a state in which the pressure difference of the low-pressure EGR passage is made zero by the learning condition setting means.

' In a second aspect of the present invention, wherein the learning condition setting means is configured to, when fuel cut-off control of the internal combustion engine is being executed, open the high-pressure EGR valve and the low-pressure EGR valve, and close the high-pressure throttle valve to make the pressure difference zero.

In a third aspect of the present invention, wherein the learning condition setting means is configured to, when fuel cut-off control of the internal combustion engine is being executed, open the high-pressure EGR valve and the low-pressure EGR valve, and close the high-pressure throttle valve and the low-pressure throttle valve to make the pressure difference zero.

In a fourth aspect of the present invention, wherein the learning condition setting means is configured to, when engine stop control that temporarily stops the internal combustion engine is being executed, open the low-pressure EGR valve to make the pressure difference zero.

In a fifth aspect of the present invention, the control apparatus for an internal combustion engine further comprising:

temperature acquiring means that acquires a temperature of the differential pressure sensor;

wherein the learning control means is configured to learn a temperature characteristic of an offset that is a zero point output of the differential pressure sensor.

**Advantageous Effects of Invention**

According to the first invention, the learning condition setting means sets a pressure difference in the low-pressure EGR passage to zero using at least one of the high-pressure EGR valve, the low-pressure EGR valve, the high-pressure throttle valve, and the low-pressure throttle valve. In this state, a sensor signal that is output from the differential pressure sensor is a signal value for a case where there is no pressure difference (zero point output). Accordingly, the learning control means can learn output characteristics of the sensor based on this signal value. More specifically, in an internal combustion engine that includes an EGR mechanism on a high pressure side and a low pressure side, when performing learning control of a differential pressure sensor, the pressure difference can be set to zero and a learning condition can be easily established by merely performing valve control utilizing the pre-existing configuration. Accordingly, it is not necessary to add additional electromagnetic valves or the like or make design changes in order to perform learning control, and hence the system configuration can be simplified and cost reductions can be facilitated.

According to the second invention, when fuel cut-off control is executed, the learning condition setting means can close the high-pressure throttle valve and block off the low-pressure EGR passage from intake negative pressure of the internal combustion engine. Further, by opening the high-pressure EGR valve, the learning condition setting means can return gas that is discharged by pumping from cylinders while the fuel is cut off high-pressure EGR valve into the cylinders through the high-pressure EGR passage. More specifically, the gas can be recirculated using a flow channel that is blocked off from the low-pressure EGR passage by the high-pressure throttle valve. Furthermore, by opening the low-pressure EGR valve, a state can be realized in which it is also difficult for a pressure difference in the low-pressure EGR passage to transiently occur. Accordingly, the pressure difference in the low-pressure EGR passage can be set to zero, and that state can be stably maintained.

According to the third invention, when fuel cut-off control is executed, in addition to the same valve control as in the second invention, the learning condition setting means can close the low-pressure throttle valve. In a state in which the low-pressure throttle valve is closed, even if a pressure fluctuation arises on the upstream end side of the intake passage due to traveling wind of the vehicle or the like, the low-pressure EGR passage can be blocked off from the pressure fluctuation. Accordingly, in addition to the operational advantage of the second invention, the influence of traveling wind or the like can be eliminated, and a state in which a pressure difference in the low-pressure EGR passage is zero can be further stabilized.

According to the fourth invention, since an intake negative pressure or an exhaust pressure does not arise during execution of engine stop control, a learning condition can be easily established utilizing this fact. More specifically, if the low-pressure EGR valve is opened during engine stop control, even without controlling the other valves (high-pressure EGR valve, high-pressure throttle valve, and low-pressure throttle valve), the pressure difference in the low-pressure EGR passage can be set to zero, and the valve control can be simplified.

According to the fifth invention, in a state in which the pressure difference in the low-pressure EGR passage is maintained at zero, the learning control means can learn a temperature characteristic of the zero point output (offset) of the differential pressure sensor based on the offset and the sensor temperature.

**Brief Description of Drawings**

[Figure 1] Figure 1 is an overall configuration diagram for describing the system configuration of Embodiment 1 of the present invention.
[Figure 2] Figure 2 is an explanatory view that shows the correction map.
[Figure 3] Figure 3 is a flowchart that illustrates control executed by the ECU according to Embodiment 1 of the present invention.
[Figure 4] Figure 4 is a flowchart that illustrates control executed by the ECU according to Embodiment 2 of the present invention.
[Figure 5] Figure 5 is an overall configuration diagram for describing the system configuration of Embodiment 3 of the present invention.

**Description of Embodiments**

Embodiment 1

[Configuration of Embodiment 1]

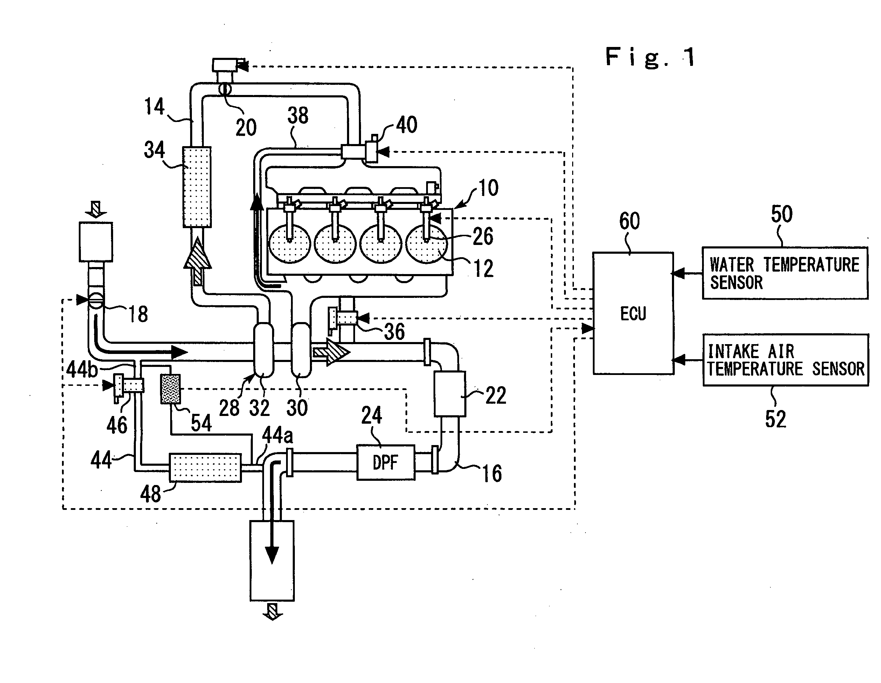

Hereunder, Embodiment 1 of the present invention is described with reference to Figure 1 to Figure 3. Figure 1 is an overall configuration diagram for describing the system configuration of Embodiment 1 of the present invention. The system of the present embodiment includes an internal combustion engine 10 that is constituted by a diesel engine. The internal combustion engine 10 includes an intake passage 14 that draws intake air into each cylinder 12, and an exhaust passage 16 through which exhaust gas is discharged from inside each cylinder 12. Two intake throttle valves 18 and 20 that are constituted by an electromagnetically driven butterfly valve or the like are provided in the intake passage 14. The intake throttle valves 18 and 20 are described in detail later. Exhaust emission purifiers such as a catalyst 22 and a DPF (diesel particulate filter) 24 that purify exhaust gas are provided in the exhaust passage 16. These exhaust emission purifiers are disposed on a downstream side of a turbine 30 that is described later. Each cylinder 12 is provided with a fuel injection valve 26 that injects fuel into intake air, as well as an intake valve and an exhaust valve that are not shown in the drawings.

The internal combustion engine 10 also includes a turbocharger 28 that supercharges intake air utilizing exhaust pressure. The turbocharger 28 is constituted by a turbine 30 that is disposed in the exhaust passage 16 and that is rotationally driven by exhaust pressure, and a compressor 32 that is disposed in the intake passage 14 and compresses intake air by rotating together with the turbine 30. In correspondence with the turbo mechanism, an intercooler 34 that cools intake air on the downstream side of the compressor 32 is provided in the intake passage 14, and a turbo bypass valve 36 for causing exhaust gas to circulate by bypassing the turbine 30 is provided in the exhaust passage 16.

Next, a high-pressure EGR mechanism and a low-pressure EGR mechanism mounted in the internal combustion engine 10 are described. The high-pressure EGR mechanism causes high-pressure exhaust gas that is diverted from the exhaust passage 16 on the upstream side of the turbine 30 to recirculate into the intake passage 14 as EGR gas. The high-pressure EGR mechanism includes a high-pressure EGR passage 38 and a high-pressure EGR valve 40. One end of the high-pressure EGR passage 38 is connected to the exhaust passage 16 on the upstream side of the turbine 30, and another end of the high-pressure EGR passage 38 is connected to the intake passage 14 on the downstream side of the compressor 32. The high-pressure EGR valve 40 is constituted by an electromagnetically driven flow control valve or the like, and is configured to adjust the flow rate of exhaust gas that flows through the high-pressure EGR passage 38.

The low-pressure EGR mechanism causes low-pressure exhaust gas (EGR gas) that is diverted from the exhaust passage 16 on the downstream side of the turbine 30 to recirculate into the intake passage 14 on the upstream side of the compressor 32. The low-pressure EGR mechanism includes a low-pressure EGR passage 44 and a low-pressure EGR valve 46. An upstream section 44a that is one end side of the low-pressure EGR passage 44 is connected to the exhaust passage 16 on the downstream side of the turbine 30 and the exhaust emission purifiers. A downstream section 44b that is another end side of the low-pressure EGR passage 44 is connected to the intake passage 14 on the upstream side of the compressor 32. The low-pressure EGR valve 46 is constituted by a similar flow control valve or the like as the high pressure side, and is configured to adjust the flow rate of exhaust gas that flows through the low-pressure EGR passage 44. An EGR cooler 48 that cools EGR gas is also provided in the low-pressure EGR passage 44. The low-pressure EGR valve 46 and the EGR cooler 48 are disposed between the upstream section 44a and the downstream section 44b of the low-pressure EGR passage 44.

Next, the first intake throttle valve 18 and the second intake throttle valve 20 that are provided in the intake passage 14 are described. The first intake throttle valve 18 constitutes a low-pressure throttle valve of the present embodiment, and is disposed on the upstream side of the compressor 32 and the low-pressure EGR passage 44. Further, the second intake throttle valve 20 constitutes a high-pressure throttle valve of the present embodiment, and is disposed at a position that is located on the downstream side of the compressor 32 and the intercooler 34 and on the upstream side of the high-pressure EGR passage 38. Each of the intake throttle valves 18 and 20 can individually open and close the intake passage 14, and are used not just to increase or decrease the intake air amount in accordance with the degree of accelerator opening, but are also used when controlling an EGR amount by EGR (Exhaust Gas Recirculation) control that is described later.

The system of the present embodiment also includes a sensor system that has a water temperature sensor 50, an intake air temperature sensor 52, a differential pressure sensor 54 and the like, and an ECU (Electronic Control Unit) 60 that controls the operational state of the internal combustion engine 10. The water temperature sensor 50 detects a coolant temperature of the internal combustion engine. The intake air temperature sensor 52 detects the temperature of the intake air (intake air temperature). The differential pressure sensor 54 is constituted by a general purpose pressure sensor or the like, and is provided in the low-pressure EGR passage 44. A pressure difference (differential pressure) that is in accordance with a pressure loss or the like when the exhaust gas passes through the EGR cooler 48 arises between the upstream section 44a and the downstream section 44b of the low-pressure EGR passage 44. The differential pressure sensor 54 detects the differential pressure between the upstream section 44a and the downstream section 44b, and outputs a sensor signal S corresponding to the differential pressure to the ECU 60. The sensor signal S is ultimately converted into an EGR gas flow rate by arithmetic processing that is described later, and used for EGR control.

In addition to the above described sensors 50 to 54, the sensor system also includes various sensors that are necessary for control of the vehicle and the internal combustion engine. Examples of such sensors include an air flow meter that detects an intake air amount, a crank angle sensor that outputs a signal that is synchronous with rotation of a crankshaft, a accelerator opening degree sensor that detects a degree of accelerator opening, an air/fuel ratio sensor that detects an air/fuel ratio of an exhaust gas, and a temperature sensor that detects a temperature of a catalyst or an exhaust gas. These sensors are connected to an input side of the ECU 60. Various actuators including the above described intake throttle valves 18 and 20, the fuel injection valve 26, the turbo bypass valve 36, and the EGR valves 40 and 46 are connected to the output side of the ECU 60.

The ECU 60 controls the operational state of the internal combustion engine by driving each actuator while detecting the operational state by means of the sensor system. As a specific example, the ECU 60 sets an injection amount and injection timing of fuel based on an intake air amount or the like that is detected by the air flow meter, and executes fuel injection control that drives the fuel injection valve 26 based on the setting contents. Further, when it is detected that the vehicle has entered a deceleration state based on the output of the accelerator opening degree sensor or the like, the ECU 60 executes fuel cut-off control that temporarily stops fuel injection in each cylinder until the deceleration state is ended. The ECU 60 also performs EGR control that controls the recirculation amount of EGR gas (EGR amount) during operation of the internal combustion engine.

In this case, EGR control that uses two EGR mechanisms is generally known as disclosed, for example, in Japanese Patent Laid-Open No. 2009-185791 and Japanese Patent Laid-Open No. 2009-216059. More specifically, according to this EGR control, for example, when the operational state of the internal combustion engine is a state with a low load and a low number of revolutions, the responsiveness of the overall EGR is ensured by preferentially using the high-pressure EGR mechanism that has superior responsiveness. Further, when the operational state of the internal combustion engine is a state with a high load or a high number of revolutions, by increasing the EGR amount of the low-pressure EGR mechanism and decreasing the EGR amount of the high-pressure EGR mechanism, the gas temperature is suppressed so that the temperature of the EGR gas does not become too high. It is thus possible to smoothly perform EGR control over a wide operating range.

The EGR amount of the high-pressure EGR mechanism can be arbitrarily controlled by adjusting the degree of opening of the high-pressure EGR valve 40 or the second intake throttle valve 20. More specifically, for example, the EGR amount on the high pressure side can be increased by increasing the degree of opening of the high-pressure EGR valve 40 or decreasing the degree of opening of the second intake throttle valve 20. On the other hand, the EGR amount of the low-pressure EGR mechanism can be arbitrarily controlled by adjusting the degree of opening of the low-pressure EGR valve 46 or the first intake throttle valve 18. More specifically, for example, the EGR amount on the low pressure side can be increased by increasing the degree of opening of the low-pressure EGR valve 46 or decreasing the degree of opening of the first intake throttle valve 18.

[Features of Embodiment 1]

According to the EGR control for the low pressure side, the differential pressure sensor 54 generates a voltage signal that corresponds to a differential pressure $\Delta P$ between the upstream section 44a and the downstream section 44b of the low-pressure EGR passage 44, and outputs the voltage signal as the sensor signal S to the ECU 60. The ECU 60 converts the sensor signal S to the differential pressure $\Delta P$, and furthermore converts the differential pressure $\Delta P$ to a flow rate G of EGR gas, and performs feedback control of the EGR amount based on the flow rate G. Therefore, the ECU 60 has map data f1 in which the relationship between the sensor signal S and the differential pressure $\Delta P$ is set, and map data f2 in which the relationship between the differential pressure $\Delta P$ and the flow rate G is set. According to the map data f1 and f2, the flow rate G can be calculated from the sensor signal S based on the following equations (1) and (2).

$$\Delta P \ = \ f1(S+\Delta S) \qquad \ldots(1)$$

$$G \ = \ f2(\Delta P) \qquad \ldots(2)$$

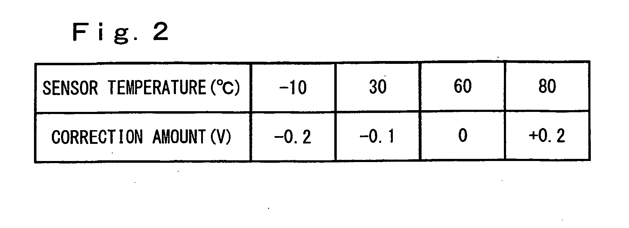

Here, the value "$\Delta S$" in equation (1) above is a correction amount for correcting an error in the sensor signal S. That is, an error is liable to arise in the output of the differential pressure sensor 54 due to temperature changes or degradation over time or the like. Consequently, a correction map that is map data for correcting the sensor signal S is previously stored in the ECU 60. Figure 2 is an explanatory view that shows the correction map. The correction map stores the relationship between the temperature characteristic of an offset that is zero point output of the differential pressure sensor 54, i.e. the value of the sensor signal S when the differential pressure $\Delta P$ is zero, and the sensor temperature. The ECU 60 acquires the sensor temperature by a method that is described later, and calculates the correction amount $\Delta S$ corresponding to the sensor temperature based on the correction map. Subsequently, by calculating the above equation (1) in a manner that factors in the correction amount $\Delta S$, it is possible to correct an error of the differential pressure sensor 54 and accurately calculate the flow rate G.

The ECU 60 also carries out learning control that updates the data contents of the correction map at an appropriate timing. According to the learning control, even when the output characteristics of the sensor signal S change due to an error, the most recent output characteristics can be learned and reflected in the correction map. For this reason, a non-volatile memory circuit in which data contents are rewritable and in which the data contents are held even if the power supply is cut off is mounted in the ECU 60, and the correction map is stored in this memory circuit. A feature of the present embodiment is that the above described learning control is performed utilizing the pre-existing configuration in an internal combustion engine that has two EGR mechanisms. The contents thereof are described below.

(Learning condition setting control)

When performing learning control, first, learning condition setting control is performed to create a reference state before the actual learning operation. The term "learning condition setting control" refers to, when fuel cut-off control of the internal combustion engine is being executed, maintaining the first intake throttle valve 18 and the second intake throttle valve 20 in a closed state (totally closed state), and maintaining the high-pressure EGR valve 40 and the low-pressure EGR valve 46 in an open state (totally open state) (hereunder this state is referred to as "prescribed state"). It is thereby possible to set a differential pressure that arises between the upstream section 44a and the downstream section 44b of the low-pressure EGR passage 44 to zero.

More specifically, first, when the second intake throttle valve 20 is closed, a state is entered in which the downstream section 44b of the low-pressure EGR passage 44 is blocked off from intake negative pressure that arises on the side of the cylinders 12. Further, when the first intake throttle valve 18 is closed, a state is entered in which the downstream section 44b is also blocked off from pressure fluctuations that arise on the upstream end side of the intake passage 14 due to traveling wind of the vehicle or the like. On the other hand, in a state in which the high-pressure EGR valve 40 is open, gas that is discharged by pumping from the cylinders 12 while the fuel is cut-off is guided by the intake negative pressure of the relevant cylinders 12 and flows into the high-pressure EGR passage 38, and returns into the cylinders 12 from the intake passage 14 on the downstream side of the second intake throttle valve 20. More specifically, since the gas circulates through a flow channel that is blocked off from the low-pressure EGR passage 44 by the second intake throttle valve 20, the gas does not affect the pressure inside the low-pressure EGR passage 44. Further, when the low-pressure EGR valve 46 is opened, it becomes difficult for a differential pressure to transiently occur between the upstream section 44a and the downstream section 44b. By the above described operations, the differential pressure in the low-pressure EGR passage 44 can be set to zero and that state can be stably maintained.

Although in the above description the first intake throttle valve 18 is closed, the present invention is not limited thereto, and the first intake throttle valve 18 need not necessarily be closed. More specifically, according to the learning condition setting control, a configuration may be adopted in which, among the four valves 18, 20, 40, and 46, only the second intake throttle valve 20 is maintained in a closed state, and the first intake throttle valve 18 and the EGR valves 40 and 46 are maintained in an open state. In this case also, since the influence of traveling wind of the vehicle or the like on the pressure inside the low-pressure EGR passage 44 is small, an effect can be obtained that is approximately equal to when the first intake throttle valve 18 is in a closed state. Further, it is preferable that, according to the learning condition setting control, the turbo bypass valve 36 is maintained in a closed state and exhaust gas (exhaust pressure fluctuations) is prevented as much as possible from leaking to the downstream side of the turbine 30.

As described above, according to the learning condition setting control, by switching the four vales 18, 20, 40, and 46 to the prescribed state by means of the ECU 60 and maintaining the differential pressure inside the low-pressure EGR passage 44 at zero, a condition (learning condition) suitable for learning control is established. However, according to the present invention, in order to stabilize a state in which the differential pressure is zero, a configuration may be adopted in which it is determined that the learning condition is established when a predetermined time period (for example, approximately 0.5 seconds) has elapsed since the prescribed state is realized, and furthermore, a margin of fluctuation in the sensor signal S is less than or equal to a predetermined value (for example, a pressure conversion value at 0.2 kPa or less).

(Learning control)

After the learning condition is established, since it can be regarded that the differential pressure inside the low-pressure EGR passage 44 is zero, learning control is started. According to the learning control, first, a temperature (sensor temperature) T of the differential pressure sensor 54 is estimated based on an intake air temperature detected by the intake air temperature sensor 52 and a coolant temperature detected by the water temperature sensor 50. The characteristics of the sensor temperature with respect to the intake air temperature and the coolant temperature are previously stored as map data in the ECU 60. Therefore, the sensor temperature T can be estimated based on the map data. In this connection, since there are cases in which the sensor temperature is influenced by traveling wind, according to the present invention, for example, a configuration may be adopted in which a vehicle speed that is detected by a vehicle speed sensor or the like is used as a parameter corresponding to the traveling wind, and the sensor temperature is estimated based on the vehicle speed, the intake air temperature, and the coolant temperature.

The sensor signal S in a state in which the learning condition is established is detected as a zero point output (offset) S0 of the differential pressure sensor 54 at temperature T, and the aforementioned correction map (see Figure 2) is rewritten according to the offset S0. As a specific example, in a case where, for example, the detected value of the offset when T = 30 °C is S030 = -0.3V, the corresponding learned value L30 = -0.1V of the offset in Figure 2 is rewritten to the detected value S030. In this connection, to avoid an excessive correction in this rewriting processing, a configuration may be adopted in which only a certain proportion of a difference between a detected value and a learned value is added to the learned value. More specifically, a configuration may be adopted in which calculation is carried out according to the following equation (3), where $\alpha$ is taken as a,certain proportion (1> $\alpha$ >0), and the new and old learned values are taken as L and L', respectively.

$$L = (S0-L') \times \alpha+L' \qquad ...(3)$$

Further, an amount by which a learned value is changed in a single learning operation may decrease as the occasions (frequency) of the learning control increase. Accordingly, in the present invention, a configuration may be adopted in which the aforementioned proportion $\alpha$ decreases as the learning frequency increases.

A configuration may also be adopted in which, in the learning control, learned values corresponding to other sensor temperatures are rewritten, and not just the learned value corresponding to the estimated sensor temperature T. In this case, for example, when rewriting the learned value L30 of the relevant temperature with the detected value S030 at T = 30 °C, as shown in the following equations (4) to (6), S030 is also reflected at predetermined proportions $\beta1$, $\beta2$, and $\beta3$ in the learned values L-10, L60, and L80 for T = -10, 60, and 80 °C, respectively.

$$L-10 = (S0-L-10') \times \beta1+L-10' \qquad ...(4)$$

$$L60 = (S0-L60') \times \beta2+L60' \qquad ...(5)$$

$$L80 = (S0-L80') \times \beta3+L80' \qquad ...(6)$$

In this connection, preferably the above proportions $\beta1$ to $\beta3$ gradually decrease as the temperature difference with respect to the sensor temperature (in the above example, T = 30 °C) at the learning time point increases. As one example, a configuration may be adopted in which $\beta1$, $\beta2$, and $\beta3$ are set to 0.3, 0.2, and 0.1, respectively.

[Specific processing to realize Embodiment 1]

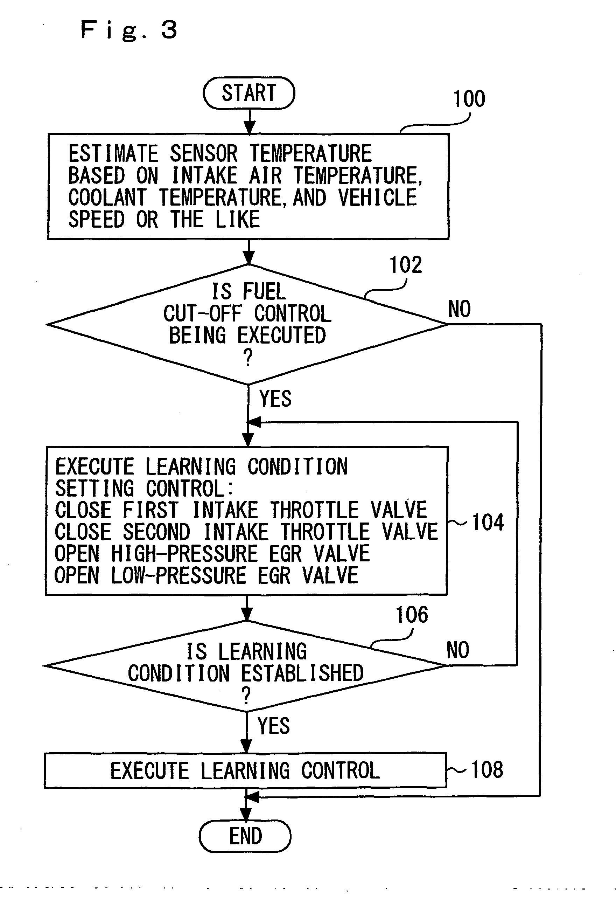

Figure 3 is a flowchart that illustrates control executed by the ECU according to Embodiment 1 of the present invention. In this connection, the routine shown in Figure 3 is repeatedly executed during operation of the internal combustion engine. According to this routine, first, the sensor temperature is estimated based on the vehicle speed, the intake air temperature, and the coolant temperature (step 100). Next, the ECU determines whether or not fuel cut-off control (F/C) is being executed for the internal combustion engine (step 102). If fuel cut-off control is not being executed, the ECU ends the control. If fuel cut-off control is being executed, the ECU maintains the aforementioned four valves 18, 20, 40, and 46 in the prescribed state, and executes the learning condition setting control (step 104). Subsequently, the ECU determines whether or not the learning condition is established by, for example, determining whether or not a predetermined time period has elapsed in a state in which the fluctuations in the sensor output are small (step 106). If the learning condition is established, the ECU executes learning control based on the sensor signal S and the sensor temperature T (step 108). In contrast, if the learning condition is not established, the ECU stands by until the learning condition is established.

As described in detail above, according to the present embodiment, in an internal combustion engine including a high-pressure EGR mechanism and a low-pressure EGR mechanism, when performing learning control of the differential pressure sensor 54, the differential pressure in the low-pressure EGR passage 44 can be set to zero by merely controlling the four valves 18, 20, 40, and 46. More specifically, the learning condition can easily be established by utilizing the pre-existing system configuration and fuel cut-off control. Accordingly, it is not necessary to add additional electromagnetic valves or the like or make design changes in order to perform learning control, and hence the system configuration can be simplified and cost reductions can be facilitated.

Further, when establishing the learning condition, the second intake throttle valve 20 can be closed during fuel cut-off control to thereby block off the low-pressure EGR passage 44 from intake negative pressure. Further, by opening the high-pressure EGR valve 40, gas that is discharged by pumping from the cylinders 12 while the fuel is being cut-off can be returned into the cylinders through the high-pressure EGR passage 38. That is, the gas can be circulated using a flow channel that is blocked off from the low-pressure EGR passage 44 by the second intake throttle valve 20. Further, by opening the low-pressure EGR valve 46, a state in which it is difficult for a differential pressure to transiently occur in the low-pressure EGR passage 44 can be realized.

Furthermore, by closing the first intake throttle valve 18, even if pressure fluctuations arise on the upstream end side of the intake passage 14 due to traveling wind of the vehicle or the like, it is possible to block off the low-pressure EGR passage 44 from the pressure fluctuations. Accordingly, the differential pressure of the low-pressure EGR passage 44 can be set to zero, and that state can be stably maintained. Further, in a state in which the learning condition is established, the temperature characteristic of the offset can be learned based on the zero point output (offset) of the differential pressure sensor 54 and the sensor temperature, and errors in the sensor signal caused by temperature changes or degradation over time can be absorbed by the learning control.

Embodiment 2

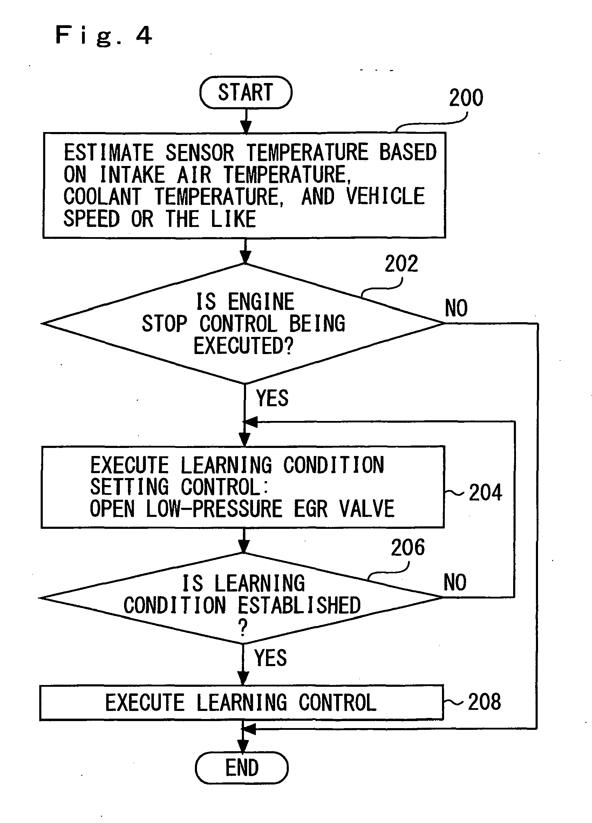

Next, Embodiment 2 of the present invention is described with reference to Figure 4. According to the present embodiment, although the same system configuration (Figure 1) as that of the above described Embodiment 1 is employed, the configuration differs from Embodiment 1 with respect to the control contents described hereunder. Note that, according to the present embodiment, components that are the same as in the foregoing Embodiment 1 are denoted by the same reference symbols, and a description of such components is omitted.

[Features of Embodiment 2]

The system of the present embodiment is configured to perform engine stop control that temporarily stops an internal combustion engine in a situation in which output of the internal combustion engine is unnecessary. Engine stop control includes, for example, idling stop control that stops the internal combustion engine during an idling operation from when the vehicle stops until the vehicle starts moving again, and for hybrid electric vehicles or the like, motor driving control under which the vehicle runs by means of an electric motor in a state in which the internal combustion engine is stopped.

According to the learning condition setting control, the low-pressure EGR valve 46 is opened during execution of the above described engine stop control. More specifically, in a state in which the internal combustion engine is stopped, since an intake negative pressure or an exhaust pressure does not arise, by opening the low-pressure EGR valve 46 the differential pressure of the low-pressure EGR passage 44 can be maintained at zero and the learning condition can be established. Subsequently, after establishing the learning condition, learning control that is the same as in Embodiment 1 is executed.

[Specific processing to realize Embodiment 2]

Figure 4 is a flowchart that illustrates control executed by the ECU according to Embodiment 2 of the present invention. In this connection, the routine shown in Figure 4 is repeatedly executed during operation of the internal combustion engine. According to this routine, first, the sensor temperature is estimated in the same manner as in Embodiment 1 (step 200). In the next processing, the ECU determines whether or not engine stop control is being executed (step 202). If the ECU determines that engine stop control is not being executed, the ECU ends the control. If the ECU determines that engine stop control is being executed, first, the ECU opens the low-pressure EGR valve 46 (step 204). Next, by performing the same processing as in steps 106 and 108 of Embodiment 1, the ECU determines whether or not the learning condition is established, and executes the learning control (steps 206 and 208).

According to the present embodiment configured as described above, approximately the same operational advantages as in the foregoing Embodiment 1 can be obtained. In particular, since engine stop control is utilized according to the present embodiment, the learning condition can be established with greater ease. More specifically, by opening the low-pressure EGR valve 46 during engine stop control, even without controlling the intake throttle valves 18 and 20 and the high-pressure EGR valve 40, the differential pressure in the low-pressure EGR passage 44 can be set to zero and thus the valve control can be simplified.

Embodiment 3

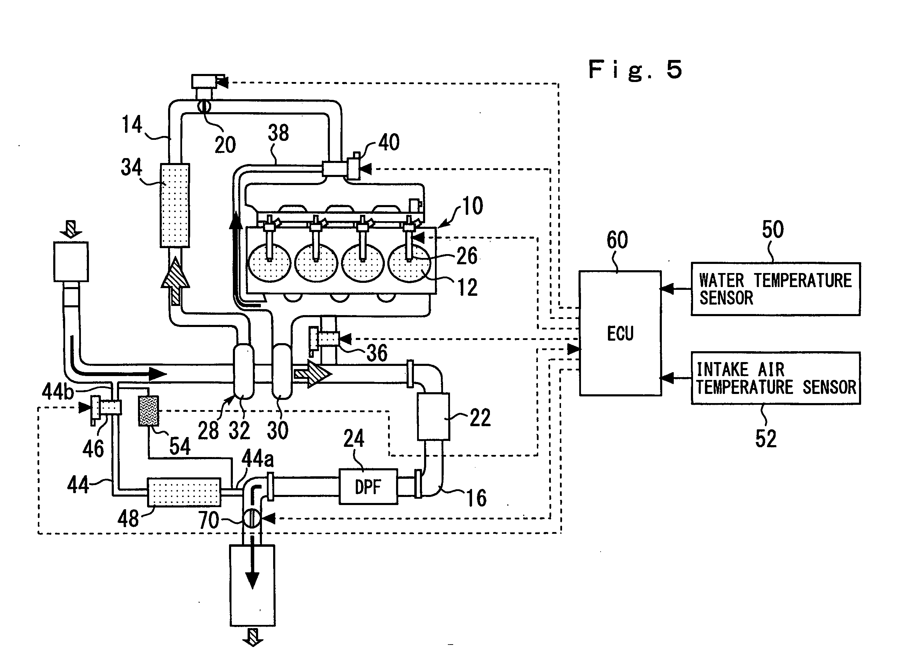

Next, Embodiment 3 of the present invention is described with reference to Figure 5. According to the present embodiment, although approximately the same system configuration as that of the above described Embodiment 1 is employed, the configuration of the present embodiment differs from Embodiment 1 in the respect that an exhaust throttle valve is used instead of the first intake throttle valve as a low-pressure throttle valve. Note that, according to the present embodiment, components that are the same as in the above described Embodiment 1 are denoted by the same reference symbols, and a description of such components is omitted.

[Features of Embodiment 3]

Figure 5 is an overall configuration diagram for describing the system configuration of Embodiment 3 of the present invention. According to the present embodiment, an exhaust throttle valve 70 is provided at a position that is on the downstream side of the low-pressure EGR passage 44 in the exhaust passage 16. The exhaust throttle valve 70 is constituted by an electromagnetically driven butterfly valve or the like, and opens or closes the exhaust passage 16 in accordance with a control signal that is input from the ECU 60. The exhaust throttle valve 70 functions in the same manner as the first intake throttle valve 18 of Embodiment 1. More specifically, by decreasing the degree of opening of the exhaust throttle valve 70, the EGR amount produced by the low-pressure EGR mechanism can be increased.

Further, according to the learning condition setting control, the exhaust throttle valve 70 and the second intake throttle valve 20 are maintained in a closed state, and the high-pressure EGR valve 40 and the low-pressure EGR valve 46 are maintained in an open state. As a result, similarly to Embodiment 1, the differential pressure in the low-pressure EGR passage 44 can be made zero. According to the present embodiment configured in this manner also, approximately the same operational advantages as in the above described Embodiment 1 can be obtained, and system configurations to which the present invention can be applied can be diversified.

Note that, according to the above embodiments, steps 104 and 204 in Figure 3 and Figure 4 show specific examples of learning condition setting means. Further, steps 108 and 208 show specific examples of learning control means, and steps 100 and 200 show specific examples of temperature acquiring means.

Further, according to Embodiment 1, a configuration is adopted in which a sensor temperature is estimated based on the vehicle speed, the intake air temperature, and the coolant temperature. However, the present invention is not limited thereto and, for example, a configuration may be adopted in which the temperature of the differential pressure sensor is directly detected by a temperature sensor.

**Description of Reference Numerals**

10 internal combustion engine, 12 cylinder, 14 intake passage, 16 exhaust passage, 18 first intake throttle valve (low-pressure throttle valve), 20 second intake throttle valve (high-pressure throttle valve), 22 catalyst, 24 DPF, 26 fuel injection valve, 28 turbocharger, 30 turbine, 32 compressor, 34 intercooler, 36 turbo bypass valve, 38 high-pressure EGR passage, 40 high-pressure EGR valve, 44 low-pressure EGR passage, 44a upstream section, 44b downstream section, 46 low-pressure EGR valve, 48 EGR cooler, 50 water temperature sensor, 52 intake air temperature sensor, 54 differential pressure sensor, 60 ECU, 70 exhaust throttle valve (low-pressure throttle valve)

**Claims**

**1.** A control apparatus for an internal combustion engine (10), comprising:

a turbocharger (28) that has a turbine (30) that is provided in an exhaust passage (16) of an internal combustion engine (10) and a compressor (32) that is provided in an intake passage (14), and that supercharges intake air utilizing an exhaust pressure;
a high-pressure EGR passage (38) that causes an exhaust gas that is diverted from the exhaust passage (16) on an upstream side of the turbine (30) to recirculate to the intake passage (14) on a downstream side of the compressor (32), in which a flow rate of the exhaust gas is adjusted by a high-pressure EGR valve (40);
a low-pressure EGR passage (44) that causes an exhaust gas that is diverted from the exhaust passage (16) on a downstream side of the turbine (30) to recirculate to the intake passage (14) on an upstream side of the compressor (32), in which a flow rate of the exhaust gas is adjusted by a low-pressure EGR valve (46) that is disposed between an upstream section (44a) and a downstream section S44b):

a first intake throttle valve (18) that opens and closes the intake passage (14) on an upstream side of the low-pressure EGR passage (44);
a second intake throttle valve(20) that opens and closes the intake passage (14) at a position on the downstream side of the compressor (32) and an upstream side of the high-pressure EGR passage (38);
a differential pressure sensor (54) that detects a pressure difference between an upstream section and a downstream section of the low-pressure EGR passage (44) in order to control a recirculation amount of an exhaust gas based on the pressure difference;

learning condition setting means that when fuel cut-off control of the internal combustion engine (10) is being executed, maintains at zero the pressure difference of the low-pressure EGR passage (44) by closing the first intake throttle valve (18) to block off the low-pressure EGR passage (44) from traveling wind, closing the second intake throttle valve (20) to block off the low-pressure EGR passage (44) from intake negative pressure generated in cylinder, opening the high-pressure EGR valve (40) to return gas that is discharged from the cylinder into the cylinder from the high-pressure EGR passage (38), and opening the low-pressure EGR valve (46) to connect the upstream section (44a) with the downstream section (44b) of the low-pressure EGR passage (44); and

learning control means that learns an output characteristics of the differential pressure sensor (54) based on an output of the differential pressure sensor (54) in a state in which the pressure difference of the low-pressure EGR passage (44) is maintained at zero by the learning condition setting means.

2. The control apparatus for an internal combustion engine (10) according to claim 1, further comprising:

temperature acquiring means that acquires a temperature of the differential pressure sensor (54);
wherein the learning control means is configured to learn a temperature characteristic of an offset that is a zero point output of the differential pressure sensor (54).

## Patentansprüche

1. Steuervorrichtung für eine Brennkraftmaschine (10), mit
einer Turboladereinrichtung (28), die eine Turbine (30), die in einem Abgaskanal (16) einer Brennkraftmaschine (10) vorgesehen ist, und eine Kompressoreinrichtung (32), die in einem Einlasskanal (14) vorgesehen ist, aufweist, und die Einlassluft unter Verwendung eines Abgasdrucks auflädt,
einem Hochdruck-EGR-Kanal (38), der ein Abgasgas, das von dem Abgaskanal (16) an einer oberstromigen Seite der Turbine (30) abgeleitet ist, dazu bringt, in den Einlasskanal (14) an einer unterstromigen Seite der Kompressoreinrichtung (32) wieder in Umlauf zu gelangen, in dem eine Flussrate des Abgasgases durch ein Hochdruck-EGR-Ventil (40) angepasst ist,
einem Niedrigdruck-EGR-Kanal (44), der ein Abgasgas, das von dem Abgaskanal (16) an einer unterstromigen Seite der Turbine (30) abgeleitet ist, dazu bringt, in den Einlasskanal (14) an einer oberstromigen Seite der Kompressoreinrichtung (32) wieder in Umlauf zu gelangen, in dem eine Flussrate des Abgasgases durch ein Niedrigdruck-EGR-Ventil (46) angepasst ist, das zwischen einem oberstromigen Abschnitt (44a) und einem unterstromigen Abschnitt (44b) angeordnet ist,
einem ersten Einlassdrosselventil (18), das den Einlasskanal (14) an einer oberstromigen Seite des Niedrigdruck-EGR-Kanals (44) öffnet und schließt,
einem zweiten Einlassdrosselventil (20), das den Einlasskanal (14) an einer Position an der unterstromigen Seite der Kompressoreinrichtung (32) und einer oberstromigen Seite des Hochdruck-EGR-Kanals (38) öffnet und schließt,
einem Differentialdrucksensor (54), der einen Druckunterschied zwischen einem oberstromigen Abschnitt und einem unterstromigen Abschnitt des Niedrigdruck-EGR-Kanals (44) erfasst, um ein Umlaufausmaß eines Abgasgases basierend auf dem Druckunterschied zu steuern,
einer Lernbedingungseinstelleinrichtung, die, wenn Brennstoffabschaltsteuerung der Brennkraftmaschine (10) ausgeführt wird, den Druckunterschied des Niedrigdruck-EGR-Kanals (44) auf Null hält durch Schließen des ersten Einlassdrosselventils (18), um den Niedrigdruck-EGR-Kanal (44) von Fahrtwind abzuschneiden, durch Schließen des zweiten Einlassdrosselventils (20), um den Niedrigdruck-EGR-Kanal (44) von in einem Zylinder erzeugtem Einlassnegativdruck abzuschirmen, durch Öffnen des Hochdruck-EGR-Ventils (40), um von dem Zylinder ausgespeistes Gas von dem Hochdruck-EGR-Kanal (38) in den Zylinder zurückzuführen, und durch Öffnen des Niedrigdruck-EGR-Ventils (46), um den oberstromigen Abschnitt (44a) mit dem unterstromigen Abschnitt (44b) des Niedrigdruck-EGR-Kanals (44) zu verbinden, und
einer Lernsteuereinrichtung, die eine Ausgabecharakteristik des Differentialdrucksensors (54) basierend auf einer Ausgabe des Differentialdrucksensors (54) in einem Zustand, in dem der Druckunterschied des Niedrigdruckkanals (44) durch die Lernbedingungseinstelleinrichtung auf Null gehalten wird, lernt.

2. Steuervorrichtung für eine Brennkraftmaschine (10) gemäß Anspruch 1, ferner mit
einer Temperaturerlangungseinrichtung, die eine Temperatur des Differentialdrucksensors (54) erlangt,
wobei die Lernsteuereinrichtung dazu eingerichtet ist, um eine Temperaturcharakteristik eines Versatzes zu lernen, der eine Nullpunktausgabe des Differentialdrucksensors (54) ist.

## Revendications

1.  Équipement de commande pour un moteur à combustion interne (10), comprenant :

    un turbocompresseur (28) qui possède une turbine (30) qui est disposée dans un conduit d'échappement (16) d'un moteur à combustion interne (10) et un compresseur (32) qui est disposé dans un conduit d'admission (14), et qui suralimente de l'air d'admission en utilisant la pression d'échappement ;
    un conduit (38) de recyclage des gaz d'échappement (EGR pour "Exhaust Gas Recirculation") haute pression qui fait que des gaz d'échappement qui sont détournés du conduit d'échappement (16) du côté amont de la turbine (30) sont recyclés vers le conduit d'admission (14) du côté aval du compresseur (32), le débit des gaz d'échappement étant ajusté par une soupape (40) d'EGR haute pression ;
    un conduit (44) d'EGR basse pression qui fait que des gaz d'échappement qui sont détournés du conduit d'échappement (16) du côté aval de la turbine (30) sont recyclés vers le conduit d'admission (14) du côté amont du compresseur (32), le débit des gaz d'échappement étant ajusté par une soupape (46) d'EGR basse pression qui est située entre une section amont (44a) et une section aval (44b) ;
    un premier papillon (18) d'étranglement d'admission qui ouvre et ferme le conduit d'admission (14) du côté amont du conduit (44) d'EGR basse pression ;
    un second papillon (20) d'étranglement d'admission qui ouvre et ferme le conduit d'admission (14) à une position du côté aval du compresseur (32) et du côté amont du conduit (38) d'EGR haute pression ;
    un capteur de pression différentielle (54) qui détecte la différence de pression entre la section amont et la section aval du conduit (44) d'EGR basse pression afin de commander, en se basant sur la différence de pression, la quantité de recyclage de gaz d'échappement ;
    un moyen de fixation de conditions d'apprentissage qui, lorsqu'une commande de coupure d'alimentation du moteur à combustion interne (10) est en cours d'exécution, maintient à zéro la différence de pression du conduit (44) d'EGR basse pression en fermant le premier papillon (18) d'étranglement d'admission pour isoler le conduit (44) d'EGR basse pression du vent dû à la vitesse, en fermant le second papillon (20) d'étranglement d'admission pour isoler le conduit (44) d'EGR basse pression de la pression négative d'admission engendrée dans un cylindre, en ouvrant la soupape (40) d'EGR haute pression pour renvoyer le gaz qui est évacué du cylindre dans le cylindre à partir du conduit (38) d'EGR haute pression, et en ouvrant la soupape (46) d'EGR basse pression pour relier la section amont (44a) avec la section aval (44b) du conduit (44) d'EGR basse pression ; et
    un moyen de commande d'apprentissage qui apprend une caractéristique de sortie du capteur de pression différentielle (54) en se basant sur une sortie du capteur de pression différentielle (54) dans l'état où la différence de pression du conduit (44) d'EGR basse pression est maintenue à zéro par le moyen de fixation de conditions d'apprentissage.

2.  Équipement de commande selon la revendication 1 pour un moteur à combustion interne (10), comprenant en outre :

    un moyen d'acquisition de température qui acquiert la température du capteur de pression différentielle (54), dans lequel le moyen de commande d'apprentissage est constitué pour apprendre une caractéristique de température d'un décalage qui est la sortie au point zéro du capteur de pression différentielle (54).

EP 2 495 419 B1

Fig. 1

# Fig. 2

| SENSOR TEMPERATURE (℃) | -10 | 30 | 60 | 80 |
|---|---|---|---|---|
| CORRECTION AMOUNT (V) | -0. 2 | -0. 1 | 0 | +0. 2 |

Fig. 3

START

ESTIMATE SENSOR TEMPERATURE
BASED ON INTAKE AIR TEMPERATURE,
COOLANT TEMPERATURE, AND VEHICLE
SPEED OR THE LIKE                    100

IS FUEL
CUT-OFF CONTROL          NO
BEING EXECUTED           102
?

YES

EXECUTE LEARNING CONDITION
SETTING CONTROL:
CLOSE FIRST INTAKE THROTTLE VALVE
CLOSE SECOND INTAKE THROTTLE VALVE    104
OPEN HIGH-PRESSURE EGR VALVE
OPEN LOW-PRESSURE EGR VALVE

IS LEARNING              NO
CONDITION ESTABLISHED    106
?

YES

EXECUTE LEARNING CONTROL      108

END

Fig. 4

```
                    ┌─────────────┐
                    │    START    │
                    └──────┬──────┘
                           │                              200
        ┌──────────────────▼──────────────────┐        ⌐
        │ ESTIMATE SENSOR TEMPERATURE BASED    │
        │ ON INTAKE AIR TEMPERATURE,           │
        │ COOLANT TEMPERATURE, AND VEHICLE     │
        │ SPEED OR THE LIKE                    │
        └──────────────────┬──────────────────┘
                           │                    202
                          ╱▼╲                  ⌐
                    ╱─────────────╲        NO
                  ╱   IS ENGINE     ╲──────────────────┐
                 ╱ STOP CONTROL BEING ╲                │
                  ╲    EXECUTED?     ╱                 │
                    ╲─────────────╱                    │
                           │ YES                        │
              ┌────────────▼─────────────┐             │
        ┌────▶│ EXECUTE LEARNING CONDITION │           │
        │     │ SETTING CONTROL:          │  ~204      │
        │     │ OPEN LOW-PRESSURE EGR VALVE│           │
        │     └────────────┬─────────────┘             │
        │                  │              206          │
        │                 ╱▼╲            ⌐             │
        │            ╱─────────────╲   NO              │
        │          ╱   IS LEARNING    ╲────────────────┘
        └─────────╱ CONDITION ESTABLISHED╲
                   ╲       ?          ╱
                    ╲─────────────╱
                           │ YES
        ┌──────────────────▼──────────────────┐
        │  EXECUTE LEARNING CONTROL           │ ~208
        └──────────────────┬──────────────────┘
                           │
                    ┌──────▼──────┐
                    │    END      │
                    └─────────────┘
```

Fig. 5

EP 2 495 419 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009185791 A
- JP 2008038661 A

- JP 2009216059 A